# EUROPEAN PATENT APPLICATION

(11) **EP 0 812 723 A2**
(43) Date of publication of application: **17.12.1997**
(21) Application number: 96306942.2
(22) Date of filing: 24.09.1996
(51) Int. Cl.: B60N 2/44

(54) **Apparatus for vibrating seats**

(30) Priority: 11.06.1996 JP 149377/96
(71) Applicant: FUKUOKA KAGAKU LTD., Nishikamo-gun, Aichi 470-02 (JP)
(72) Inventor: Fukuoka, Masahiro, Nishikamo-gun, Aichi 470-02 (JP)
(74) Representative: Wakerley, Helen Rachael

(57) **Abstract**

An apparatus for vibrating a seat, as shown in Fig. 1, for effectively preventing a driver from dozing off during driving comprising a seat 1 fixed on a sliding mechanism 25 mounted on a floor surface 30a of an automobile 30, a direct current motor 7 placed within a seat bottom 2 of the seat 1, unbalanced weights 16 connected with a rotation axis 7a of the direct current motor 7 whereby the direct current motor 7 is actuated so as to rotate the unbalanced weights 16 and produce vibration for vibrating the seat 1.

## Description

### FIELD OF THE INVENTION

The present invention relates to an apparatus for vibrating a seat to be employed for a driver's seat of an automobile and the like so as to prevent a driver from dozing during driving.

### BACKGROUND OF THE INVENTION

A variety of apparatus have been proposed to keep a driver alert and prevent a driver of an automobile and the like, from dozing during driving. Such an apparatus usually comprises a sensor for sensing that a driver has started to doze and means for wakening a driver by receiving a signal from the sensor. For example, there is a sensor which senses that a driver has started to doze by sensing the number of times the driver nods per unit time or the time for leaning one's head forward, and the like, because a driver nods when the driver starts to doze, and sends a signal to means for wakening the driver. Also, there is means for alerting a driver which operates by receiving the signal and alerting the driver by producing a loud sound near to the driver's ear(s). Therefore, according to this apparatus, if a driver starts to doze, the sensor senses that the driver's head is leaning forward, and actuates the means for alerting and wakening the driver.

However, because the above mentioned apparatus operates only after a driver has started to doze off, the driver may lose concentration, due to drowsiness, and cause a car accident when the driver has started to dose to such a degree that the means for alerting and wakening the driver may not be effective. The present invention can provide apparatus for effectively preventing a driver from dozing off by vibrating the seat.

An apparatus for vibrating a seat of the present invention comprises a seat vibrated by vibrating means aligned within a seat bottom of the seat fixed on a seat-support member installed on a floor surface.

As a result of a series of studies on apparatus to effectively prevent dozing during driving, the inventor noticed that it is too late to prevent accidents when a driver is woken through a sensor which senses a driver has started to doze. Then, he made further studies and reached a conclusion that, if a driver's seat is always being vibrated, the driver remains alert and does not doze off, and, as a result, traffic accidents to be caused by dozing during driving can be completely prevented.

### DISCLOSURE OF THE INVENTION

The invention will be more fully described and will be better understood from the following description, taken with the appended drawings, in which:
Fig. 1 is a side view of one embodiment of the present invention;
Fig. 2 is a side schematic view of a seat;
Fig. 3 is a side schematic view of an automobile;
Fig. 4 is a side view of a motor and unbalanced weights;
Fig. 5 is a plan view of a motor and unbalanced weights;
Fig. 6 is a right side view of a motor;
Fig. 7 is a side view of an unbalanced weight;
Fig. 8 is a side view of another embodiment of the present invention;
Fig. 9 is a side view of further another embodiment of the present invention; and
Fig. 10 is a side view illustrating a position where a direct current motor is mounted.

The following are the detailed description of the various embodiments.

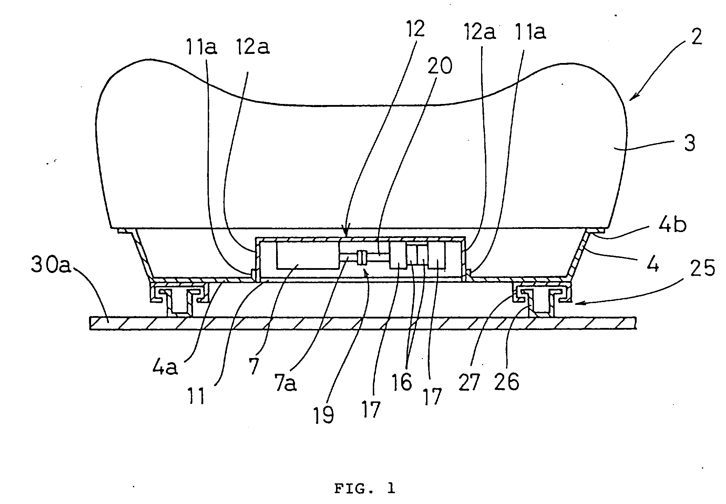

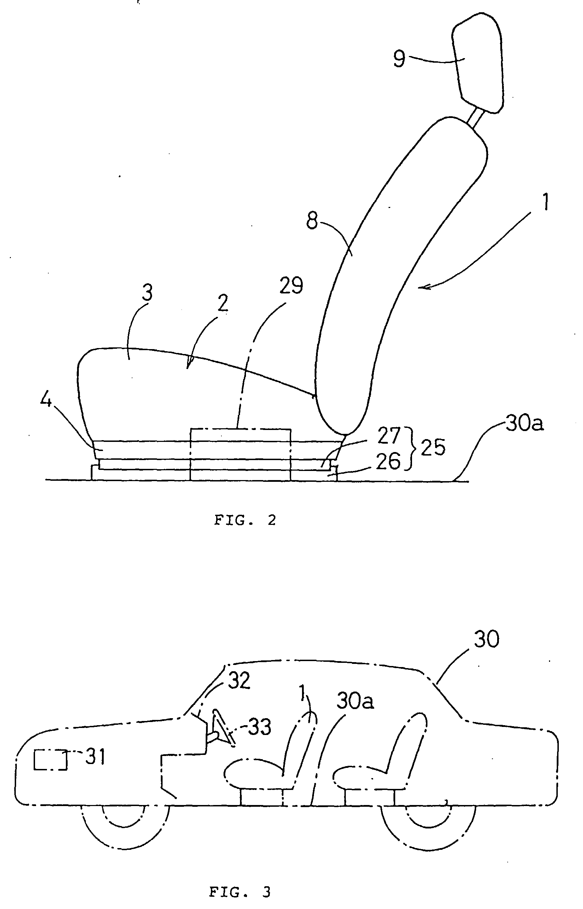

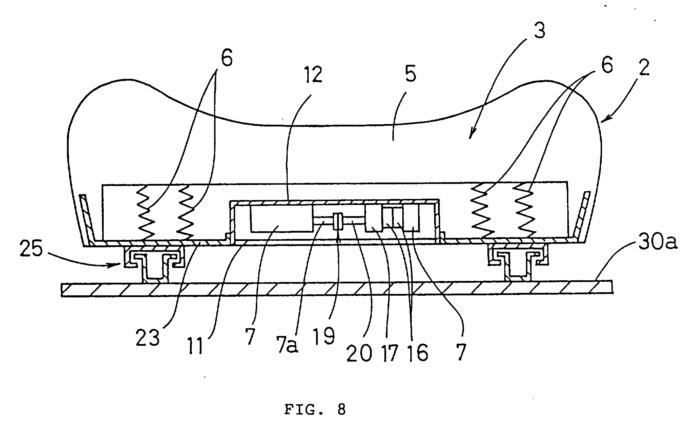

Fig. 1 shows a side view of the first embodiment of the present invention. In this embodiment, a seat bottom 2 of a seat 1 (shown in Fig. 2) is fixed via seat sliding mechanisms 25 on a floor surface 30a of an automobile 30 (shown in Fig. 3). Each of the seat sliding mechanisms 25 is provided with a lower sliding rail (a seat-support member) 26 fixed by a bolt (not shown) on the floor surface 30a of the automobile 30, an upper sliding rail 27 fixed by a bolt (not shown) on the underside of the seat bottom 2 and a control lever (not shown) and the like. In Fig. 2, 8 is a seat back of the seat 1 and 9 is a headrest thereof.

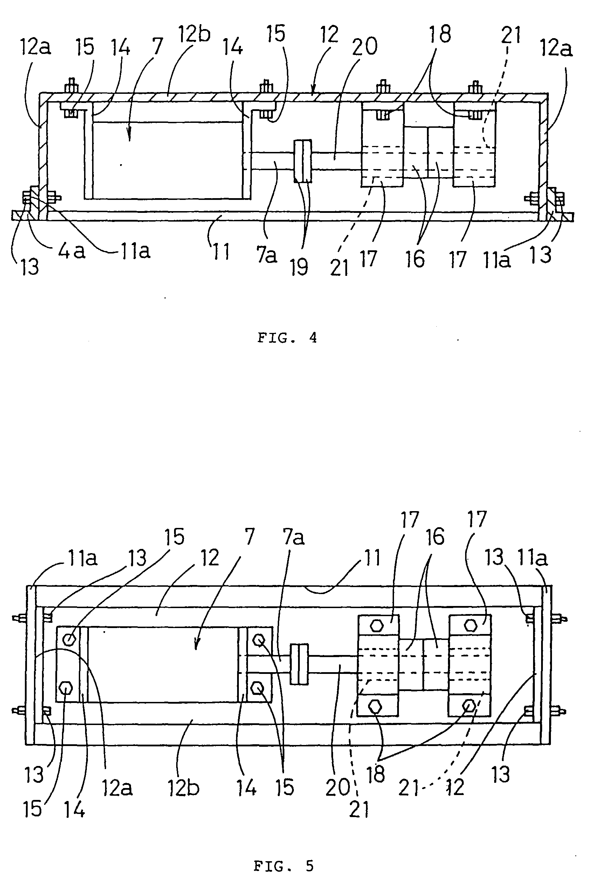

The seat bottom 2 is provided with a seat cushion member 3 comprising a urethane pad 5, a spring 6 (shown in Fig. 8) and the like, and a dish shaped backup member or seat support 4 made of a metal rigid body. The upper sliding rail 27 of the seat sliding mechanism 25 is fixed by a bolt (not shown) on a bottom plate 4a of the backup member 4. In the meantime, a collar 4b is formed on the periphery of an upper end of the backup member 4. The lower end of the seat cushion member 3 is placed and fixed on the collar 4b or supported thereby. A rectangular slot 11 is arranged at an approximate middle part of the backup member 4 and, each right and left side of the slot 11 is folded upward to be formed into a folding portion or flange 11a, on which (each lower end of two corresponding longitudinal members 12a of) plate 12 is fixed by bolts 13 as shown in Fig.4 to 6. This plate may be U-shaped, or is concave, and is preferably of iron. Further, L-shaped stationary plates 14, which are aligned on both right and left sides of a direct current motor 7, are fixed by bolts 15 on a horizontal portion 12b of the plate 12. An end of a rotation axis 7a of the direct current motor 7 is projecting out of an exterior wall, for example of the motoring casing, and is connected via a coupling (or a connecting member) 19 with a rotation axis body 20.

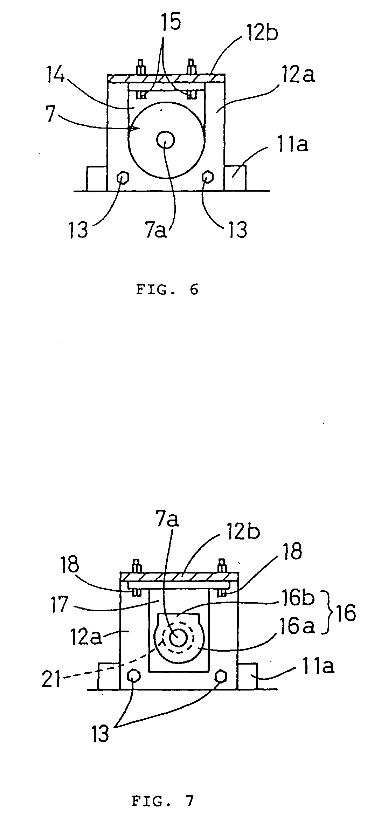

The rotation axis body 20 is rotatably supported by a pair of support bodies 17 aligned at a specific interval. Through holes are formed in the pair of support bodies 17 in such a manner that the holes correspond to each other. Metal bearings 21 are engaged into the through holes. The rotation axis body 20 is rotatably supported by the two sets of metal bearings 21.Further, a pair of detachable unbalanced weights 16 are installed between the two support bodies 17 on the rotation axis body 20. Each unbalanced weight 16 is formed into a disc shape respectively, and, as shown in Fig. 7, comprises a 2/3 circular arc portion 16a aligned concentrically with the rotation axis 7a of the direct current motor 7 and a rectangular portion 16b formed on the chord joining the ends of the 2/3 arc 16a. Still further, the rotation axis 7a of the direct current motor 7 and the rotation axis body 20 are arranged horizontally and a right-left direction of the seat 1 (in such a manner that they cross at right angles to the direction of progress of the automobile 30 shown in Fig. 2). In the figure, 18 are bolts to fasten both of the support bodies 17 on the horizontal portion 12b of the plate 12.

The direct current motor 7 is electrically connected with a battery 3 mounted in the front part of the automobile 30 shown in Fig. 3. Further, a START switch (not shown) for starting the direct current motor 7, a STOP switch (not shown) for stopping thereof, a vibration control switch (not shown) for adjusting the degree of vibration and the like are installed in a control box 29 (shown as a dash line in Fig. 2) aligned along the seat 1. The vibration control switch has three levels; "a weak position" whereby 1,200 rpm in the rotation number of the direct current motor 7 may impart the vibration of 37kgf in force, 5mm in amplitude and 20Hz in frequency with a seat maximum load 100kg to the seat 1 (a vibration which vibrates the seat 1 in the direction of progress of the automobile 30), "a middle position" whereby 1,700rpm thereof may impart the vibration of 53.3kgf in force, 7mm in amplitude and 28Hz in frequency to the seat 1 and "a strong position" whereby 2,500rpm may impart the vibration of 83.3kgf in force, 10mm in amplitude and 42Hz in frequency to the seat 1. In every level, a vibration cycle of a 20-second vibration and a 10-second interval repeats several times (three times in this embodiment of the present invention). In Fig. 3, 32 is an instrumental panel wherein a cluster of meters are installed and 33 is a wheel.

In this first embodiment, if a driver feels drowsiness, he may push the START switch of the control box 29 so as to actuate the direct current motor 7. Then, the direct current motor 7 may run so that the rotation axis 7a rotates, the rotation axis body 20 connected therewith rotates and both of the unbalanced weights 16 attached thereto rotate (in a periodical manner that a 20-second vibration and a 10-second interval repeats alternately three times as mentioned above). Subsequently, this vibration is transmitted to the seat bottom 2 of the seat 1 via both of the support bodies 17 and the backup member 4. As a result, the whole seat 1 vibrates as the seat bottom 2 vibrates so that a driver who seats himself on the seat 1 may shake off drowsiness and may not doze during driving.

Thus, according to the above first embodiment, the vibration produced by the unbalanced weights 16 of the rotation axis body 20 connected with the rotation axis 7a of the direct current motor 7 is transmitted to the seat 1 to be vibrated so that a driver may not doze during driving, resulting in complete prevention of car accidents caused by dozing off at the wheel. In the meantime, since the seat itself vibrates, the vibration is necessarily transmitted to a driver regardless of his posture as long as he seats himself on the driver's seat even if he has started to nod with drowsiness. For this reason, dozing at the wheel can effectively be prevented. Further, since the rotation axis 7a and the rotation axis body 20 of the direct current motor 7 are aligned in a right-left direction of the seat 1 (in such a manner that they cross at right angles to the direction of progress of the automobile 30), the seat 1 can be vibrated along the direction of progress (back and forth) as well as up and down, the doze at the wheel can effectively be prevented. In addition, if the length of the rotation axis body 20 or the position for installing the unbalanced weights 16 is adjusted, the position where the vibration is produced can be adjusted. Furthermore, the direct current motor 7 and both the unbalanced weights 16 are contained within the dish-like backup member 4 and protected thereby so that they may not be damaged even if a can or the like on the floor surface 30a of the automobile 30 rolls over and goes under the seat bottom 2 of the seat 1.

Fig. 8 illustrates a side view of another embodiment of the present invention. In this second embodiment, a direct current motor 7 shown in Fig. 4 is contained within a seat cushion member 3 and fixed therein. Namely, the direct current motor 7 is mounted on a dish-like frame body 23 supporting an urethane pad 5 in such a manner that springs 6 are installed within a space under the urethane pad 5 which forms the seat cushion member 3. Except for that, the remaining parts are the same as the above first embodiment. The same reference numerals are alloted for like parts.

According to this second embodiment, the direct current motor 7 is contained within the seat cushion member 3 and fixed therein. Therefore, this is easily applicable for the automobile 30 without the backup member 4 of the first embodiment shown in Fig. 1. Further, the direct current motor 7 is protected by the seat cushion member 3 so as not to be damaged by a can or the like on the floor surface 30a of the automobile 30. Still further, this embodiment retains the same function and effects as those of the first embodiment.

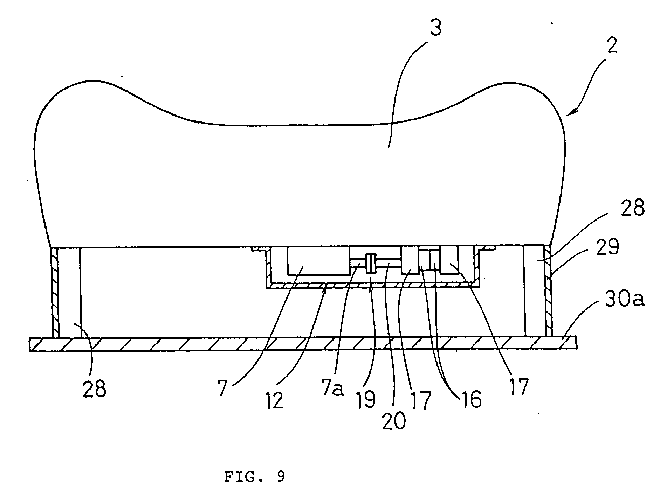

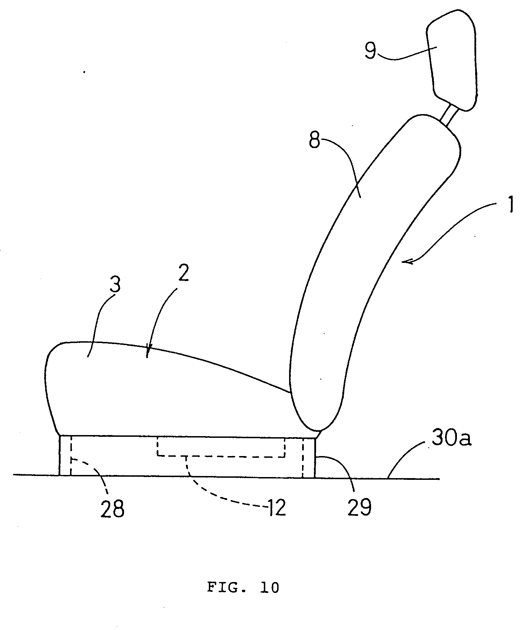

Fig. 9 illustrates still another embodiment of the present invention. In this embodiment, the direct current motor shown in Fig. 4 is mounted on the underside of a seat bottom 2 and contained within a rectangular cover 29 made of a plate, fabric or the like surrounding a space under the seat bottom 2. In the meantime, the position where a direct current motor 7 is placed is not the middle of the underside face of the seat bottom 2 but shifted toward right or left (a position is shifted toward right in the figure) and also shifted toward the rear (as shown in Fig. 10). In the figure, legs 28 extended from four corners of the seat bottom 2 are fixed on a floor surface 30a of an automobile 30. Except for that, the remaining parts are the same as those of the above embodiments. The same reference numerals are allotted for those alike.

According to this third embodiment, the direct current motor 7 is contained within the cover 29 surrounding a space under the seat bottom 2 and fixed therein so that the direct current motor 7 can easily be mounted on the seat bottom 2 in case of the automobile 30 having no extra space within the seat bottom 2. Further, the direct current motor 7 is protected by the cover 29 so as not to be damaged by a can or the like on the floor surface 30a of the automobile 30. Still further, the direct current motor 7 is mounted on the rear part of the seat bottom 2 of the seat 1, which is positioned approximately right under a driver's hip so that the vibration can be surely and strongly transmitted to the driver by his hip. This promotes the effect of preventing dozing at the wheel more efficiently. Even still further, this embodiment retains the same function and effects of the first embodiment.

Further, in these embodiments, the direct current motor 7 and the rotation axis body 20 are mounted in such a manner that they cross at right angles to the direction of progress of the automobile 30, which, however, is not critical. They may be mounted in such a manner that they are along with the direction of progress of the automobile 30. In this case, vibration which vibrates the seat 1 at right angles to the direction of the automobile 30 (in right-left direction) as well as up and down can be produced so that the doze during driving can effectively be prevented. In this way, the direction how to mount the direct current motor 7 and the rotation axis body 20 can appropriately be selected so that the vibration can be arranged in accord with a driver's taste. In the meantime, the magnitude of the vibration is set up at 11 to 46Hz in frequency, preferably 16 to 28Hz with a seat maximum load 100kg. The frequency over 46Hz may produce extremely strong vibration and interfere with driving while the frequency less than 11Hz is not enough vibration to alert and waken a driver. In addition, it is proved by a test that the frequency within a range of 16 to 28Hz can surely alert and waken a driver with suitable vibration.

Meanwhile, in these embodiments, if a driver feels drowsiness, he pushes on a START switch arranged on the control box 29 so as to actuate the direct current motor 7. A timer can be acceptable instead of the START switch. In this case, only if the timer is set up in starting a car, the direct current motor 7 will work in a certain time, for example, 10 minutes after he started to drive while it will also stop automatically in a certain time, for example, 5 minutes after the vibration started. Such a timer is convenient if a driver knows in advance from his experience that he feels drowsiness in a certain time (for example, 10 minutes) after starting to drive. When a timer is installed, an apparatus for making a precaution buzzer may be installed on the control box 29 and emit a metallic sound, a big intermittent sound or the like from a speaker thereof (for example, 5 seconds) before the set time (when the direct current motor 7 works automatically) so as to show a sign that vibration will start soon. In the meantime, a switch for stopping the vibration can be adoptable together with the timer so as to be stopped manually. Further, in these embodiments, the START switch and the STOP switch for the direct current motor 7 are separately installed, which, however, is not critical. An on/off switch for starting/stopping the direct current motor 7 can be adoptable. Still further, the control box 29 is installed beside the seat 1 in these embodiments, which, however, is not critical. The control box may be contained inside the instrumental panel 32; the switches, the timer and the like may be aligned on the instrumental panel 32 in the front of the seat 1.

In the meantime, the shape of the unbalanced weight 16 is not critical. Any shape may be acceptable only if it can rotate and produce vibration. Further, the seat bottom 2 is only composed of the seat cushion 3 in the second embodiment shown in Fig. 8, however, the seat bottom 2 may be composed of the seat cushion member 3 and the backup member 4 (as shown in Fig. 1). Still further, the unbalanced weights 16 are mounted on the rotation axis body 20 connected with the rotation axis 7a of the direct current motor 7, which, however, is not critical. They may be mounted on the rotation axis 7a of the direct current motor 7.

Besides, in the embodiment shown in Fig. 1 or 8, the seat 1 is installed on the floor surface 30a of the automobile 30 via the seat sliding mechanisms 25, which, however, is not critical. The seat 1 may immovably be fixed on the floor surface 30a. Further, in the third embodiment shown in Fig. 9, the legs 28 are fixed on the floor surface 30a, which, however, is not critical. The legs may be fixed on the seat sliding mechanisms 25 shown in Fig. 1. Still further, the sliding mechanisms 25 in the embodiment shown in Fig. 1 or 8, or in the above modification (wherein the legs are fixed on the sliding mechanisms 25) of Fig. 9, may be mounted on an air-cushion device.

### EFFECTS OF THE INVENTION

As mentioned above, according to the apparatus for vibrating a seat of the present invention, vibration means is installed inside a seat bottom of a seat so that vibration thereby can be transmitted to the seat to be vibrated. A driver who seats himself on the seat may not doze off during driving accordingly whereby car accidents to be caused by drowsiness at the wheel can be prevented completely. Meanwhile, since the seat itself vibrates, the vibration is necessarily transmitted to a driver regardless of his posture as long as he seats himself on the driver's seat even if he has started to nod with drowsiness. For this reason, the doze at the wheel can effectively be prevented. In the meantime, in the embodiment of the present invention that the vibration means comprises a motor and unbalanced weights attached to a rotation axis thereof so as to vibrate a seat with vibration caused when the rotation axis of the motor rotates, the vibration produced by the rotation of the motor is transmitted to a seat to be vibrated. Moreover, if the direction of the rotation axis of the motor is selectively varied, the direction of vibration to the seat can be varied. Further, in the embodiment of the present invention that the seat bottom of the seat comprising a seat cushion member and a backup member, which supports thereof from under, to which a motor is fixed, there are advantages that no extra space is required around the seat bottom as well as the motor can be protected by the backup member. Still further, in the embodiment of the present invention that the motor is fixed on the seat cushion member forming the seat bottom of the seat, there are advantages that no extra space is required around the seat bottom as well as the motor can be protected by the seat cushion member. Even still further, in the embodiment of the present invention that the unbalanced weights are attached to the rotation axis projecting through an exterior wall of the motor, there is an advantage that the unbalanced weights can easily be replaced. Even still furthermore, in the embodiment that the unbalanced weights are attached to the rotation axis body connected through a coupling member with a projection of the rotation axis projecting out of an exterior wall of the motor, the position where the vibration is produced can be varied by appropriately selecting the length of the rotation axis body or varying the position to be installed with the unbalanced weights, so that the doze at the wheel can effectively be prevented.

## Claims

1. An apparatus for vibrating a seat comprising vibrating means alligned within a seat bottom of the seat fixed on a seat-support member installed on a floor surface.

2. An apparatus for vibrating a seat according to claim 1 wherein the vibrating means comprise a motor and an unbalanced weight attached to a rotation axis of the motor, to cause vibration when the rotation axis rotates, so as to vibrate the seat.

3. An apparatus for vibrating a seat according to claim 1 or 2 wherein the seat bottom of the seat has a seat cushion member and a backup member for supporting the seat cushion member from underneath and a motor is fixed on the backup member.

4. An apparatus for vibrating a seat according to claim 1 or 2 wherein the seat bottom of the seat has a seat cushion member on which a motor is fixed.

5. An apparatus for vibrating a seat according to any of claims 2-4 wherein the rotation axis projects through an exterior wall of the motor and the unbalanced weight is installed on the projecting portion.

6. An apparatus for vibrating a seat according to any of claims 2-4 wherein the rotation axis projects through an exterior wall of the motor, a rotation axis body is combined through a coupling member with the end of the projecting portion and the unbalanced weight is installed on the rotation axis body.
